# EUROPEAN PATENT APPLICATION

(11) **EP 1 950 986 A1**
(43) Date of publication of application: **30.07.2008**
(21) Application number: 06804950.1
(22) Date of filing: 17.10.2006
(51) Int. Cl.: H04Q 7/32

(54) **METHOD FOR IDENTIFYING CO-FREQUENCY CELLS, METHOD FOR COMBINING SERVICES AND THE USER TERMINAL THEREFOR**

(30) Priority: 17.10.2005 CN 200510109066; 17.10.2005 CN 200510109065
(71) Applicant: Huawei Technologies Co., Ltd., Longgang District Shenzhen Guangdong 518129 (CN)
(72) Inventor: YIN, Liyan, Guangdong518129 (CN)
(74) Representative: Körber, Martin Hans
(86) International application number: PCT/CN2006/002731
(87) International publication number: WO 2007/045164

(57) **Abstract**

A method for identifying intra frequency cells includes: the user equipment in the state of receiving broadcast multicast services acquiring intra frequency cells which participate in a combination of the broadcast multicast services received by itself; and implementing the intra frequency measurement on each of the intra frequency cells which have been acquired to identify unidentified intra frequency cells from the intra frequency cells acquired. Correspondingly, the present invention also discloses a method for combining broadcast multicast services and a user equipment thereof. According to the present invention, the user equipment is enabled to implement an effective combination of the broadcast multicast services in the intra frequency cells, and improve the combination effects and the coverage of the broadcast multicast services.

## Description

### Field of the Invention

The present invention relates to cell identification technology in the third-generation mobile communication systems (3G, The 3rd Generation), and more particularly to a method for identifying the intra frequency cells, combining services and the user equipment thereof.

### Background of the Invention

The universal mobile telecommunications system (UMTS) is a third generation mobile communication system, which uses a WCDMA air interface technology and mainly developments in the WCDMA/GSM global standardization organizations 3GPP.

In the 3GPP UMTS standards, according as whether the radio resource control (RRC) connection is established, a user equipment (UE) may be divided into two categories, the user equipment in an idle mode and the user equipment in an RRC connected mode. The user equipment which d oes not establish the RRC connection with the UMTS universal terrestrial radio access Network (UTRAN) is in the idle mode. The user equipment in the idle mode may be distinguished only through the identity of a non-access stratum (NAS), such as an international mobile subscriber identity (IMSI). The user equipment which e stablishes the RRC connection with the UTRAN, is in the RRC connected mode. The user equipment in the RRC connected mode is assigned a radio network temporary identity (RNTI) as the identity of the user equipment in the public transmission channel.

The user equipment in the RRC connected mode, in accordance with the level of RRC connection and the type of the transmission channel which the user equipment is capable of using, may be divided into different states, in which the user equipment in a CELL_PCH state, a CELL_FACH state or a CELL_DCH state may be distinguished in the level of the cells, and the user equipment in a URA_PCH state may be distinguished in the level of the UTRAN registration area (URA). The user equipment in the CELL_DCH state is assigned a dedicated physical channel and may use the dedicated transmission channel and the shared channel as well as a combination thereof. The user equipment in the CELL_FACH state monitors a public transmission channel (Forward Access Channel, FACH) continuously in the downlink and is assigned a default public channel (Reverse Access Channel, RACH) in the uplink. The user equipment in the CELL_PCH state or the URA_PCH state monitors a paging channel (Page Channel, PCH) through a relevant page indicator channel (PICH) by adopting a discontinuous reception (Discontinuous Reception, DRX) way. The user equipment in these two states nono uplink activity.

In the 3GPP norms, it is prescribed that neighboring intra frequency cells need to be measured by the user equipment. When the hierarchy cell structure (HCS) is not applied, the criteria of the user equipment implementing the intra frequency measurement are as follows:

If Sx> Sintrasearch, the user equipment may do not select to implement the intra frequency measurement;

If Sx≤ Sintrasearch, the user equipment implements the intra frequency measurement; and

If the current service cell does not send Sintrasearch, the user equipment implements the intra frequency measurement.

The parameter Sintrasearch in the above criteria represents the intra frequency measurement threshold, and the intra frequency measurement threshold is sent by the current service cell of the user equipment through the system broadcasting.

In the above criteria of the intra frequency measurement, according to the differences of the type of the cells in which the user equipment works, the above parameter Sx respectively represents the following meanings:

When the cell in which the user equipment works is FDD cell, Sx represents Squal, where

Squal=Q_{qualmeas}-Qqualmin; ( In 3GPP norms, the formula is called S criterion)

when the cell in which the user equipment works is TDD cell, Sx represents Srxlev, where

Srxlev=Qᵣₓₗₑᵥₘₑₐₛ - Qrxlevmin - Pcompensation. ( In 3GPP norms, the formula is called S criterion )

The specific meaning of the parameters in two formulas is shown in the below table.

| | |
|---|---|
| Squal | Cell selection quality value, only applying to the FDD cell |
| Srxlev | Cell selection reception level value |
| Q_{qualmeas} | Measured cell quality value, only applying to the FDD cell |
| Qᵣₓₗₑᵥₘₑₐₛ | Measured cell reception level value |
| Qqualmin | Minimum required quality level in the cell, only applying to the FDD cell |
| Qrxlevmin | Minimum required RX level in the cell |
| Pcompensation | Max ( UE_TXPWR_MAX_RACH-P_MAX, 0) |
| UE_TXPWR_MAX_RACH | Maximum TX power level a user equipment may use when accessing the cell on RACH |
| P_MAX | The maximum RF transmitting power of a user equipment |

The above criteria of the intra frequency measurement are only applicable to the intra frequency measurement when the user equipment is in the idle state, the URA_PCH state or the CELL_PCH state. When the user equipment is in the CELL_F ACH state, the user equipment should constantly measure the intra frequency cells which have been identified and search new intra frequency cells. When the user equipment is in the idle state, the URA_PCH state, the CELL_PCH state or the CELL_FACH state, the user equipment only considers the intra frequency measurement cells on which a mandatory measurement is implemented as an intra frequency measurement cells in the cells re-election according to the above criteria of the intra frequency measurement.

When the HCS is applied, the criteria of the intra frequency measurement implemented by the user equipment are as follows:

For the user equipment which is not in a high-speed mobile case:

If (Srxlev≤ SsearchHCS) or (if the user equipment is FDD mode terminal and Sx≤ Sintersearch), the user equipment implements a measurement on both the intra frequency cells and the inter frequency cells. If (Sx> Sintrasearch), the user equipment implements a measurement only on both the intra frequency cells and the inter frequency cells of which HCS priority is higher than that of the current service cell. If (Sx≤ Sintrasearch), the user equipment implements a measurement on both the intra frequency cells and the inter frequency cells of which HCS priority is equal to or higher than that of the current service cell.

If the current service cell does not send Sintrasearch, the user equipment implements intra frequency measurement on all the intra frequency cells, and implements inter frequency measurement on all the inter frequency cells of which HCS priority is higher than that of the current service cell.

If the current service cell does not send SearchHCS, or the user equipment is an FDD mode terminal and the current service cell does not send Sintrasearch, the user equipment implements a measurement on both the intra frequency cells and the inter frequency cells.

For the user equipment which is in a high-speed mobile case:

If (Srxlev≤ SsearchHCS) or (if the user equipment is FDD mode terminal and Sx≤ Sintersearch), or if the current service cell does not send SearchHCS, or the user equipment is FDD mode terminal and the current service cell does not send Sintrasearch, the user equipment implements a measurement on both the intra frequency cells and the inter frequency cells. For other cases, the user equipment implements a measurement on both the intra frequency cells and the inter frequency cells of which HCS priority is equal to or lower than that of the current service cell.

In the above criteria, the parameter Sintrasearch represents the intra frequency measurement threshold, the parameter Sintersearch represents the inter frequency measurement threshold, and the parameter SsearchHCS represents the measurement threshold in the case of HCS. The parameters Sintrasearch, Sintersearch and SsearchHCS are respectively sent in a form of broadcasting by the current service cell system.

The above criteria of the intra frequency measurement are only applicable to the intra frequency measurement when the user equipment is in the idle state, the URA_PCH state or the CELL_PCH state. When the user equipment is in the CELL_FACH state, the user equipment should constantly measure the intra frequency cells which have been identified and search new intra frequency cells. When the user equipment is in the idle state, the URA_PCH state, the CELL_PCH state or the CELL_FACH state, the user equipment only considers the intra frequency measurement cells which are implemented a mandatory measurement as an intra frequency measurement cells in the cells re-election according to the above criteria of the intra frequency measurement.

At the same time, with the development of the third-generation mobile communication technology, users are requiring more and more services, in addition to the current voice service. Because the third-generation mobile communication system may provide data transmission in a higher rate in comparison with the second generation mobile communication system, a large number of multimedia services have been emerging, such as video telephone, picture downloads and high-speed Internet browsing. Some application services require multiple users to simultaneously receive the same data, such as video-on-demand, television broadcasting, video conferencing, online education and interactive games.

For the purpose of effectively utilizing the mobile communication network resources, a concept of the multicast and broadcast is introduced into the third-generation mobile communication system. The multicast and broadcast service is a technology of sending the same data from a data source to multiple targets. Therefore, the WCDMA/GSM global standardization organization 3GPP has proposed a multimedia broadcasting/multicast service (MBMS). MBMS is a point to multipoint service sending the same data from a data source to multiple users in the mobile communications network to share network resources and improve the utilization of network resources, especially the utilization of the air interface resources.

The data transmission modes of the MBMS between the user equipment and the UTRAN may be divided into two types, one is a point to point (PTP) mode and the other is a point to multipoint (PTM) mode. The PTP mode is used for the multicast mode of MBMS. In the multicast mode, the user equipment which is in the RRC connected mode receives control information through a dedicated control channel (DCCH) and receives data information through a dedicated traffic channel (DTCH). The PTM mode is used for the broadcast or multicast mode of MBMS. In this mode, the user equipment receives data information through an MBMS point-to-multipoint traffic channel (MTCH) and receives control information through an MBMS point-to-multipoint control channel (MCCH).

The control information of the MBMS in the PTM mode is sent through the MCCH. The control information of the MBMS sent on the MCCH includes, but not limited to, service information, access information and radio bearer information. For the sake of simplicity, the control information of the MBMS which is sent on the MCCH hereinafter is called as "the MCCH information". The MCCH information may be divided into two kinds, one is critical information and the other is non-critical information. The critical information includes, but not limited to, MBMS neighboring cells information, MBMS service information and MBMS radio bearer. The non-critical information is MBMS access information.

In the cell, the user equipment obtains the available MBMS service information by receiving the MCCH information, and also obtains access information of interested services by receiving the MBMS access information in the MCCH information and sends a request to the UTRAN according to the access information.

For the purpose of improving the gain and enhance coverage of MBMS PTM services received by the user equipment, the user equipment may combine the MBMS PTM services received from different cells by the way of combining. In other words, the user equipment may receive the same MBMS RB bit stream from different cells, and implement a combination of the MBMS RB bit stream received.

The user equipment may implement the combination of the same MBMS PTM services received from different cells by two ways of combining, one is selection combining and the other is soft combining. The soft combining may also include partial soft combining. The selection combining is implemented in the layer of the radio link control (RLC), and the soft combining is implemented in the physical layer. When the two combining ways are applied to the case that the time differences between the different cells from which the user equipment receiving the same MBMS PTM services are different, the soft combining is often applied to the case that the maximum of the time differences between the different cells from which the user equipment receiving the same MBMS PTM services is one transmission time interval (TTI) plus one slot [i.e. 1TTI + 1 slot], and the selection combining is often applied to the case that the time differences between the different cells is larger than that of the soft combining.

If the selection combining or the soft combining may be implemented between the different cells sending the same MBMS PTM services, the UTRAN should send MBMS neighboring cell information of the neighboring cells to the user equipment. The MBMS neighboring cell information sent includes, but not limited to, radio bearer configuration information of the neighboring cells for the selection combining or the soft combining. At the same time, when the partial soft combining is applied, the MBMS neighboring cell information sent by the UTRAN also includes combining and scheduling information of the physical layer (L1), which is used for instructing the specific time on which the user equipment implements the soft combining for the neighboring cell and the current service cell sends the same MBMS PTM services.

After acquiring the MBMS neighboring cell information, the user equipment may receive data information born on the MTCH of the neighboring cell, but not to receive control information born on the MCCH of the neighboring cell. When the user equipment receives the MBMS neighboring cell information of the neighboring cell sent by the UTRAN, according to the measured signal quality, the user equipment may determine a suitable neighboring cell used for the subsequent selection combining or soft combining. If the user equipment determines to take the selection combining or the soft combining on the neighboring cell and the user equipment has the correct MBMS neighboring cell information of the corresponding neighboring cell, the user equipment implements the selection combining or the soft combining on the current service cell and the neighboring cell.

For the purpose of supporting the combination of the MBMS PTM services, the UTRAN needs to periodically send MBMS neighboring cell PTM RB information which is the MBMS neighboring cell point-to-multipoint radio bearer information, to notify the user equipment of the PTM bearer information of one or more MBMS used by the neighboring cell now for the selection combining or the soft combining.

For the MBMS, for the purpose of ensuring the efficient utilization of resources, in the 3GPP norms, the concept of MBMS priority frequency layer is introduced. The MBMS priority frequency layer means that in order to effectively utilize the resources, the UTRAN side requires the user equipment receiving MBMS services to give priority to a frequency layer on which the UTRAN sends the MBMS services, and the priority frequency layer of each of the MBMS services is instructed to the user equipment by the UTRAN. The user equipment receiving the MBMS services is locate in the cell of the priority frequency layer instructed by the UTRAN as possible. In addition, for the purpose of ensuring mobility of the user equipment, the user equipment implements the cell re-election in the process of receiving the MBMS services.

In the current study, the FDD mode terminal which is in the idle state, the CELL_PCH state, the URA_PCH state or the CELL_FACH state, and is receiving the MBMS PTM services born on the MTCH is able to identify the intra frequency cell which is measured and use the intra frequency cell identified to combine the MBMS PTM services born on the MTCH. In addition, if the number of the intra frequency cells identified by the FDD mode terminal goes beyond the combining capacity of the FDD mode terminal, each of the intra frequency cells which are identified needs to be ranked according to the reception quality of the MTCH so as to select corresponding intra frequency cells having better reception quality of the MTCH for implementing the combination of the MBMS PTM services born on the MTCH according to the ranking result.

Up to now, the main realization process that the FDD mode terminal identifies the intra frequency cells which are in the measurement process and uses the intra frequency cells identified to combine the MBMS PTM services born on the MTCH is as follows:

1. The FDD mode terminal receives system information ( which includes system measurement and control information, neighboring cell PTM information of the MBMS services) instructed by the UTRAN, and measures the reception quality of the service cell located currently (the measurement results of measuring the reception quality of the current service cell are the values of Q_{qualmeas} and Qᵣₓₗₑᵥₘₑₐₛ in the above table , while the values of Qqualmin and Qrxlevmin in the above table is sent to the user equipment by the UTRAN through the system measurement and control information. In addition, the Pcompensation and the values of parameters containing therein in the above table are internal known to the FDD mode terminal);

2. The FDD mode terminal measures the intra frequency cells which fulfill the criteria of the intra frequency measurement, according to the above measurement results obtained by measuring and the intra frequency measurement threshold sent by the UTRAN, and the criteria of the intra frequency measurement mentioned in the above. The results include:

All the intra frequency cells do not fulfill the criteria of the intra frequency measurement so the intra frequency measurement is not implemented on all the intra frequency cells; or

All the intra frequency cells fulfill the criteria of the intra frequency measurement so the intra frequency measurement is implemented on all the intra frequency cells; or

Parts of the intra frequency cells fulfill the criteria of the intra frequency measurement so the intra frequency measurement is implemented only on the intra frequency cells fulfilling the criteria of the intra frequency measurement.

3. If the FDD mode terminal in the process of implementing the intra frequency measurement on the intra frequency cells is in the state of receiving the MBMS PTM services born on the MTCH, the FDD mode terminal identifies the cells unidentified from the intra frequency cells, and ranks each of the intra frequency cells identified according to the reception quality of the MTCH so as to select corresponding intra frequency cells having better reception quality of the MTCH for implementing the combination of the MBMS PTM services born on the MTCH according to the ranking result.

However, in the above process, the intra frequency cell identified by the FDD mode terminal is only the intra frequency cell fulfilling the requirements of the intra frequency measurement criteria. In other words, the FDD mode terminal may only identify the intra frequency cells fulfilling the requirements of the intra frequency measurement criteria for the combination of the MBMS PTM services born on the MTCH. However, under the normal circumstances, the number of the intra frequency cells used for the MBMS PTM services born on the MTCH which are instructed to the FDD equipment by the UTRAN through the MCCH control information is up to 32. Parts of or all of the intra frequency cells instructed by the UTRAN may not be identified by the FDD mode terminal for the combination of the MBMS PTM services born on the MTCH on account of not fulfilling the criteria of the intra frequency measurement. Therefore The FDD mode terminal may not implement an effective combination of the MBMS PTM services received. As a the combining effects and the coverage of the MBMS services are reduced.

### Summary of the Invention

The present invention provides a method for identifying intra frequency cells and a method for combining services thereof to enable a user equipment to implement an effective combination of broadcast multicast services in the intra frequency cells and improve combining effects and coverage of the broadcast multicast services.

Correspondinglyhe present invention also provides a user equipment corresponding to the above methods.

In order to solve the above problem, the technical solutions provided by the present invention are as follows. are as follows:

A method for identifying intra frequency cellsand includes:

acquiring, by aa user equipment in the state of receiving broadcast multicast services, intra frequency cells which participate in a combination of the broadcast multicast services received by the user equipment itself; and

implementing an intra frequency measurement on each of the intra frequency cells acquired to identify unidentified intra frequency cellsun from the intra frequency cells acquired.

A user equipment and includes:

an intra frequency cells acquiring unit adapted to acquire intra frequency cells which participate in a combination of broadcast multicast services received when it is in the state of receiving the broadcast multicast services; and

a measurement identifying unit adapted to implement an intra frequency measurement on each of the intra frequency cells acquired by the intra frequency cells acquiring unit to identify unidentified intra frequency cells unfrom the intra frequency cells acquired.

A method for combining the broadcast multicast servicesand includes:

implementing, by a user equipment in the state of receiving broadcast multicast services, an intra frequency measurement on intra frequency cells which participate in a combination of the broadcast multicast services received by the user equipment itself;

selecting, by the user equipment, intra frequency cells from the intra frequency cells measured; and

implementing the combination of the broadcast multicast services received by itself according to the intra frequency cells selected.

A user equipmentand includes:

an intra frequency measurement unit adapted to implement an intra frequency measurement on intra frequency cells which participate in a combination of broadcast multicast services received by a user equipment;

a selecting unit adapted to select intra frequency cells from the intra frequency cells measured by the intra frequency measurement unit; and

a services combining unit adapted to implement the combination of the broadcast multicast services received by the user equipment according to the intra frequency cells selected by the selecting unit.

A method for identifying the intra frequency cellsand includes:

asending ,by a UTRAN, system measurement and control information for ensuring the intra frequency cells which participate in a combination of broadcast multicast services received by a user equipment to fulfill intra frequency measurement criteria; and

implementing, by the user equipmentimplements, an intra frequency measurement on the intra frequency cells fulfilling the intra frequency measurement criteria to identify unidentified intra frequency cellsun from the intra frequency cells fulfilling the intra frequency measurement criteria, according to the system measurement and control information sent by the UTRAN.

A user equipment and the user equipment includes:

a unit adapted to receive a system measurement and control information sent by a UTRAN for ensuring the intra frequency cells which participate in a combination of the broadcast multicast services received by a user equipment to fulfill intra frequency measurement criteria; and

a unit adapted to implement an intra frequency measurement on the intra frequency cells fulfilling the intra frequency measurement criteria according to the system measurement and control information sent by the UTRAN, so as to identify unidentified intra frequency cellsun from the intra frequency cells fulfilling the intra frequency measurement criteria.

A method for combining the broadcast multicast services and includes:

sending, by a UTRAN, system measurement and control information for ensuring the intra frequency cells which participate in a combination of broadcast multicast services received by a user equipment to fulfill intra frequency measurement criteria;

implementing, by the user equipment, an intra frequency measurement on the intra frequency cells fulfilling the intra frequency measurement criteria to identify unidentified intra frequency cellsunfrom the intra frequency cells fulfilling the intra frequency measurement criteria, according to the system measurement and control information sent by the UTRAN;

selecting, by the user equipment, corresponding intra frequency cells from the intra frequency cells which have been identified principleaccording to the intra frequency cells fulfilling the intra frequency measurement criteria according to a selecting condition preset,; and

implementing the combination of the broadcast multicast services received by the user equipment according to the intra frequency cells selected.

A user equipmentand includes:

a unit adapted to receive a system measurement and control information sent by a UTRAN for ensuring intra frequency cells which participate in a combination of broadcast multicast services received by a user equipment to fulfill intra frequency measurement criteria; and

a unit adapted to according to the system measurement and control information sent by the UTRAN, implement an intra frequency measurement on the intra frequency cells fulfilling the intra frequency measurement criteria to identify unidentified intra frequency cellsun from the intra frequency cells fulfilling the intra frequency measurement criteria;

a unit adapted to select corresponding intra frequency cells from the intra frequency cells identified according to a selection condition preset; and

a unit adapted to implement a combination of the broadcast multicast services received by the user equipment according to the intra frequency cells selected.

The beneficial effects which the present invention is able to achieve are as follows:

The technical solution of the present invention technologies through the steps of the user equipment in the state of receiving broadcast multicast services acquiring the intra frequency cells which participate in the combination of the broadcast multicast service received by the user equipment itself; and implementing the intra frequency measurement on each of the intra frequency cells acquired to identify unidentified intra frequency cellsun from the intra frequency cells acquired, to enable the user equipment to subsequently select the corresponding intra frequency cells from the intra frequency cells which have been identified according to the intra frequency cells which participate in the combination of the broadcast multicast services received by itself, and implementing the combination of the broadcast multicast services received by itself according to the intra frequency cells selected to accomplish that the user equipment is able to implement an effective combination of the broadcast multicast services in a number of the intra frequency cells. Therefore, that improves the combining effects and the coverage of the broadcast multicast services.

### Brief Description of the Drawings

Figure 1 is a main realization principle flowchart of the method for identifying the intra frequency cells in accordance with the present invention;

Figure 2 is a major components block diagram of the user equipment in accordance with the present invention;

Figure 3 is a specific components block diagram of the intra frequency cells acquiring unit in the user equipment in accordance with the present invention;

Figure 4 is a main realization principle flowchart of the method for combining the broadcast multicast services in accordance with the present invention;

Figure 5 is a flowchart of the method for combining the broadcast multicast services in accordance with one embodiment of the present invention;

Figure 6 is a major component block diagram of another user equipment in accordance with the present invention;

Fig,7 is a specific component block diagram of the selecting unit in the user equipment in accordance with the first embodiment of the present invention;

Figure 8 is a specific component block diagram of the selecting unit in the user equipment in accordance with the second embodiment of the present invention;

Figure 9 is a specific componentblock diagram of the selecting subunit in the above Figure 8;

Figure 10 is a main realization principle flowchart of another method for identifying the intra frequency cells in accordance with the present invention; and

Figure 11 is a main realization principle flowchart of another method for combining the broadcast multicast services in accordance with the present invention.

### Detailed Description of the Embodiments

For the purpose of avoiding the problems in the prior art that the user equipment may not implement effective combination of the MBMS PTM services received from the intra frequency cells between the intra frequency cells, which may cause the combining effects and the coverage of the MBMS services to be reduced, the present invention provide a method that during the procedure of the user equipment implementing the measurement and identification on the intra frequency cells as receiving the MBMS PTM services. The user equipment is made to implement the measurement and identification on the intra frequency cells which participate in the combination of the MBMS PTM services received, and does not need to consider a restriction of the intra frequency measurement criteria. Therefore, with the method for identifying the intra frequency cells, it may be accomplished that the user equipment is able to implement the effective combination of the MBMS PTM services received, which is beneficial to the MBMS services coverage.

The main realization principles and the exemplary embodiments of the present invention technical solution are more fully described in conjunction with the accompanying drawings.

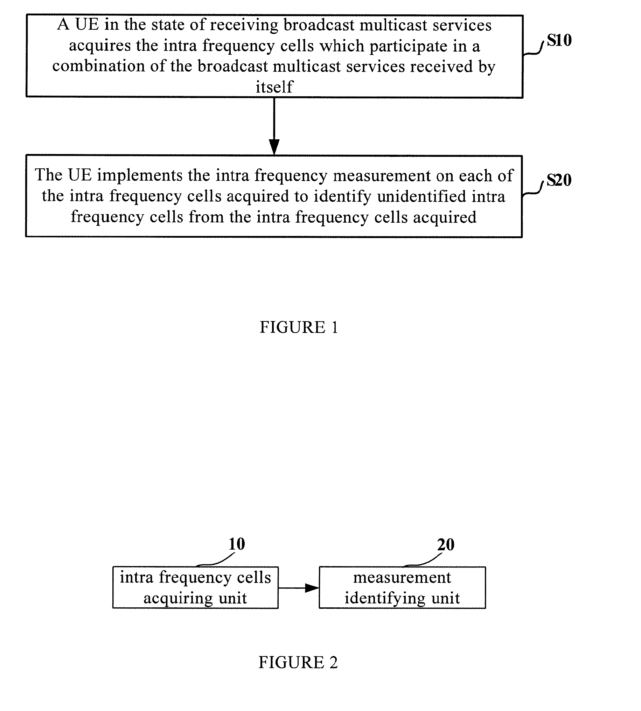

Referring to Figure 1, which is a main realization principle flowchart of the method for identifying the intra frequency cells in accordance with the present invention, the main realization process is as follows:

S10: A user equipment in the state of receiving broadcast multicast services firstly acquires intra frequency cells which may participate in a combination of the broadcast multicast services received by the user equipment itself, in which the user equipment can acquire the intra frequency cells which participate in the combination of the broadcast multicast services received by itself according to control information born on a control channel of the broadcast multicast services by a UTRAN;

S20: The user equipment respectively implements the above intra frequency measurement on each of the intra frequency cells acquired to identify unidentified intra frequency cells from the above intra frequency cells acquired.

The broadcast multicast services mentioned in the above processes include, but is not limited to includebut not limited to, multimedia broadcast multicast point-to-multipoint services (MBMS PTM services). The user equipment mentioned is, but is not limited to bebut not limited to, a frequency division duplex mode terminal (FDD mode terminal) or a time division duplex mode terminal (TDD mode terminal).

Based on According to the method for identifying the intra frequency cells provided the above, the present invention provides a user equipment correspondingly. Referring to Figure 2, which is a major component block diagram of the user equipment in accordance with the present invention, which includes intra frequency cells acquiring unit 10 and a measurement identifying unit 20, in which the main function of the two components is as follows:

The intra frequency cells acquiring unit 10 is mainly adapted to acquire intra frequency cells which participate in the combination of broadcast multicast services received when the user equipment is in the state of receiving the broadcast multicast services;

The measurement identifying unit 20 is mainly adapted to implement the intra frequency measurement on each of the intra frequency cells acquired by the above intra frequency cells acquiring unit 10 respectively to identify unidentified intra frequency cells from the intra frequency cells acquired by the intra frequency cells acquiring unit 10.

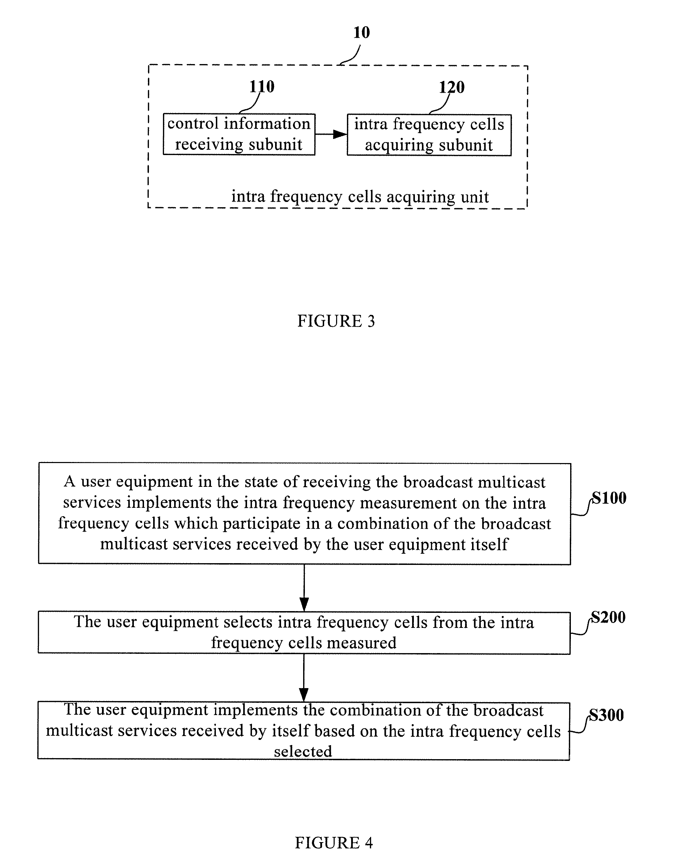

Referring to Figure 3, which is a specific component block diagram of the intra frequency cells acquiring unit in the user equipment in accordance with the present invention, including a control information receiving subunit 110 and an intra frequency cells acquiring subunit 120. The main function of the two components is as follows:

The control information receiving subunit 110 is mainly adapted to receive control information born on the control channel of the broadcast multicast service by the UTRAN;

The intra frequency cells acquiring subunit 120 is mainly used for acquiring the intra frequency cells which participate in the combination of the broadcast multicast services received by the user equipment according to the control information received by the above control information receiving subunit 110.

The above broadcast multicast services mentioned in the user equipment include, but is not limited to includebut not limited to, the multimedia broadcast multicast point-to-multipoint services (MBMS PTM services). The user equipment may operate in a frequency division duplex mode (FDD) and also may operate in a time division duplex mode (TDD).

Combined with the method for identifying the intra frequency cells provided the above, the present invention further provides a method for combining the broadcast multicast services. Referring to Figure 4, which is a main realization principle flowchart of the method for combining the broadcast multicast services in accordance with the present invention. The main realization process is as follows:

S 100: A user equipment (e.g. the TDD mode terminal or the FDD mode terminal) in the state of receiving broadcast multicast services implements an intra frequency measurement on the intra frequency cells which participate in a combination of the broadcast multicast services received by the user equipment itself.

The user equipment may acquire the intra frequency cells which participate in the combination of the broadcast multicast services received by the user equipment itself according to the control information born on the control channel of the broadcast multicast service by the UTRAN, and implement the intra frequency measurement on the intra frequency cells acquired.

In addition, the user equipment may also implement the intra frequency measurement only on the intra frequency cells which are in a condition of fulfilling intra frequency measurement criteria to participate in the combination of the broadcast multicast services received by the user equipment itself.

S200: The user equipment selects intra frequency cells from the above intra frequency cells measured.

The process of selecting the intra frequency cells from the intra frequency cells measured is, but is not limited to:

presetting a selection condition of the intra frequency cells in the user equipment

the user equipment selecting the corresponding intra frequency cells from the above intra frequency cells measured according to the selection condition set.

The selection condition of the intra frequency cells preset is, but is not limited to be:

ranking the above intra frequency cells measured by the user equipment according to the reception quality of each broadcast multicast service channel thereof; and

selecting N intra frequency cells having higher reception quality of broadcast multicast service channel for subsequently implementing the combination of the broadcast multicast services received according to the ranking result, where the N is a natural number.

S300: The user equipment implements the combination of the broadcast multicast services received by itself according to the intra frequency cells selected.

As stated the above, especially for the TDD mode terminal, when the process of the user equipment implementing the combination of the broadcast multicast services received from the intra frequency cells, which is provided by the present invention methods, is compared with the process of the user equipment implementing the combination of the MBMS PTM services received in the prior art, the TDD mode terminal may directly select the intra frequency cells from the intra frequency cells measured for a subsequent combination and does not require that these intra frequency cells selected must be the intra frequency cells identified by the TDD mode terminal. The major reason why the TDD mode terminal may handle them in this way is that in the UMTS system up to now, for the TDD mode, the SCCPCH channel bearing the MBMS services information is sent in a certain downlink slot, so that the TDD mode terminal receiving the MBMS services may directly obtain the information sent by itself in the intra frequency neighboring cells in the current service cell,. The channels bearing the MBMS services in the intra frequency neighboring cells may be searched by measuring the intra frequency neighboring cells to implement the combination of the MBMS PTM services because the TDD intra frequency cells are fully synchronized, the TDD mode terminal knows the timing information of the current service cell and acquires the broadcast channel information of the neighboring cells by the neighboring cells information sent by the current service cell.

Of course, the user equipment may also identify the unidentified intra frequency cells from the intra frequency cells measured, and select the corresponding intra frequency cells to be used for implementing the combination of the broadcast multicast services received by itself according to the intra frequency cells identified.

In other words, the above process of the user equipment selecting the intra frequency cells from the intra frequency cells measured specifically includes the following steps:

The user equipment implements an identification on the unidentified intra frequency cells in the intra frequency cells measured, and selects the corresponding intra frequency cells from the intra frequency cells identified, wherein the process of selecting the intra frequency cells from the intra frequency cells identified is, but is not limited tobut not limited to:

Presetting a selection condition of the intra frequency cells in the user equipment;

The user equipment selecting the corresponding intra frequency cells from the above intra frequency cells identified according to the selection condition set;

The selection condition of the intra frequency cells preset is,but is not limited to be but not limited to:

ranking the above intra frequency cells identified by the user equipment according to the reception quality of each broadcast multicast service channel thereof; and

selecting N intra frequency cells having higher reception quality of broadcast multicast service channel for subsequently implementing the combination of the broadcast multicast services received according to the ranking result, where the N is a natural number.

The broadcast multicast services mentioned in the above whole process are, but is not limited to be multimedia broadcast multicast point-to-multipoint services (MBMS PTM services).

Take the TDD mode terminal for example to illuminate that after applying the technical solution of the present invention, the main implementation process of implementing the services combination of the MBMS PTM services received from the intra frequency cells, includes:

1. The TDD mode terminal receives the system information sent by the UTRAN, and implements a measurement on the reception quality of the current service cells;

2. The TDD mode terminal which is i n the state of receiving the MBMS PTM services born on the MTCH implements the measurement on the intra frequency cells which participate in the combination of the MBMS PTM services received by itself;

3. The TDD mode terminal ranks the intra frequency cells measured according to the reception quality of each MTCH, and selects several intra frequency cells from the intra frequency cells ranked, which have higher reception quality of the MTCH for implementing the combination of the MBMS PTM services received by itself.

In the above step 2 and step 3, the step of the TDD mode terminal measuring the intra frequency cells which is used for combining to implement the combination of the MBMS PTM services received by itself includes two ways, one way is after all the intra frequency cells measured are identified totally, the intra frequency cells used for services combining is selected from them; the other way is after the intra frequency cells which participate in the services combining is measured, the intra frequency cells used for services combining is directly selected from them, and the unidentified cells in them do not need to be identified totally.

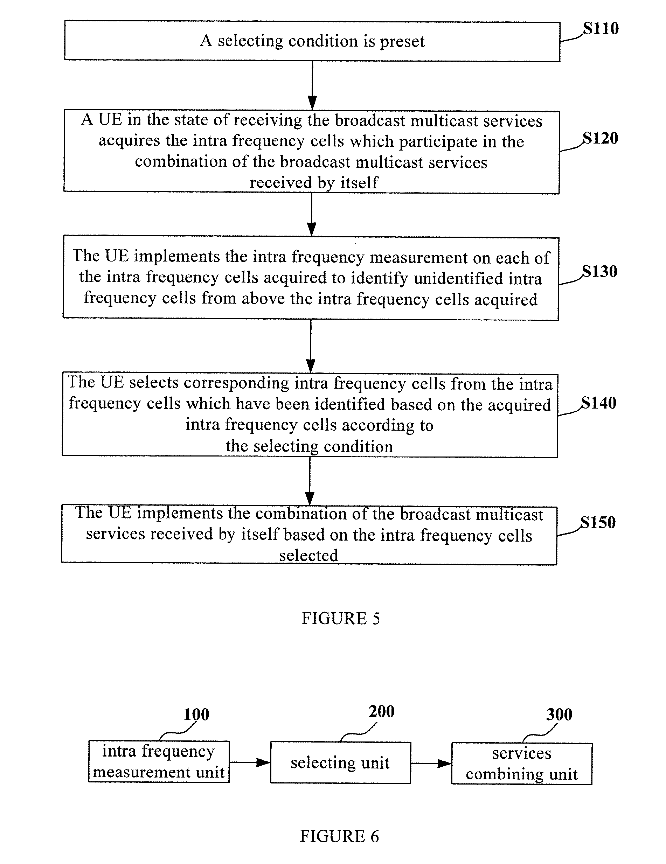

Referring to Figure 5, which is a flowchart of the method for combining the broadcast multicast services in accordance with one embodiment of the present invention the main realization process is as follows:

S110: A selection condition is preset in the user equipment. The selection condition set is, but is not limited tobut not limited to:

ranking each of the intra frequency cells identified according to the intra frequency cells which are acquired by the user equipment and participate in the combination of the broadcast multicast services received according to the reception quality of broadcast multicast service channel; and

according to the above ranking result, selecting N intra frequency cells having higher reception quality of broadcast multicast service channel for implementing combination of the broadcast multicast services received, ( the N is a natural number);

S120: The user equipment which is in the state of receiving the broadcast multicast services acquires the intra frequency cells which participate in the combination of the broadcast multicast services received by itself; the user equipment may acquire the intra frequency cells which participate in the combination of the broadcast multicast services received by itself according to the control information born on the control channel of the broadcast multicast service by the UTRAN;

S130: The user equipment implements the intra frequency measurement on each of the intra frequency cells acquired respectively to identify the unidentified intra frequency cells from the above intra frequency cells acquired;

S140: The user equipment selects the corresponding intra frequency cells from the intra frequency cells identified according to the intra frequency cells acquired according to the above selection condition preset. , according to the above selection condition, the user equipment ranks the intra frequency cells identified according to the reception quality of their broadcast multicast service channel, and selects N intra frequency cells having higher reception quality of broadcast multicast service channel for subsequently implementing the combination of the broadcast multicast services received from the ranking result; and

S150: The user equipment implements the combination of the broadcast multicast services received by itself according to the above intra frequency cells selected.

The broadcast multicast services mentioned in the above processes include, but is not limited to bebut not limited to,the multimedia broadcast multicast point-to-multipoint services (MBMS PTM services). T he user equipment mentioned includes, but is not limited to bebut not limited to, a frequency division duplex mode terminal (FDD mode terminal) or a time division duplex mode terminal (TDD mode terminal).

Based on the method for combining the broadcast multicast services provided the above, the present invention also provides a user equipment correspondingly. Referring to Figure 6, which is a major component block diagram of another user equipment in accordance with the present invention, including an intra frequency measurement unit 100, a selecting unit 200 and a services combining unit 300. The main function of these components is as follows:

The intra frequency measurement unit 100 is adapted to implement the intra frequency measurement on the intra frequency cells which participate in the combination of the broadcast multicast services received by the user equipment;

The selecting unit 200 is adapted to select the intra frequency cells from the intra frequency cells measured by the above intra frequency measurement unit 100; and

The services combining unit 300 is used for implementing the combination of the broadcast multicast services received by the user equipment, according to the intra frequency cells selected by the above selecting unit 200.

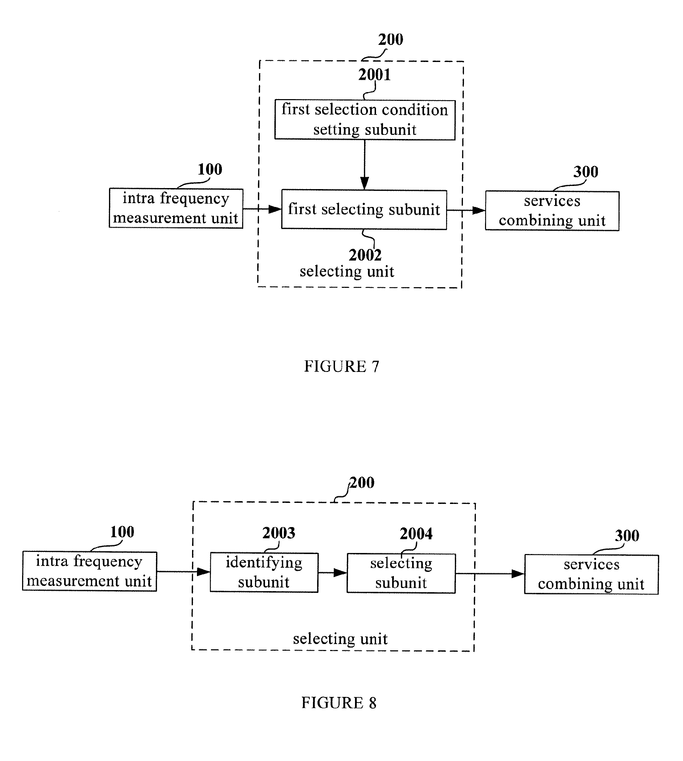

Referring to Figure 7, which is a specific component block diagram of the selecting unit in the user equipment in accordance with the first embodiment of the present invention, the selecting unit 200 mainly includes a first selection condition setting subunit 2002 and a first selecting subunit 2002, and the main function of the two components is as follows:

The first selection condition setting subunit 2001 is adapted to preset a first selection condition, and the first selection condition preset in the first selection condition setting subunit 2001 is, but is not limited tobut not limited to:

ranking the intra frequency cells measured by the intra frequency measurement unit 100 according to the reception quality of their broadcast multicast service channel; and

selecting N intra frequency cells having higher reception quality of broadcast multicast service channel a ccording to the ranking result, where the N is a natural number;

The first selecting subunit 2002 is adapted to select the corresponding intra frequency cells from the intra frequency cells measured by the intra frequency measurement unit 100 according to the first selection condition preset by the above first selection condition setting subunit 2001 In other words according to the selection condition preset by the above first selection condition setting subunit 2001, the first selecting subunit 2002 ranks the intra frequency cells which are measured by the intra frequency measurement unit 100 and participate in the combination of the broadcast multicast services received by the user equipment according to the reception quality of the broadcast multicast service channel, and selects N intra frequency cells having higher reception quality of broadcast multicast service channel for the services combining unit 300 subsequently implementing the combination of the broadcast multicast services received according to the ranking result.

Referring to Figure 8, which is a specific component block diagram of the selecting unit in the user equipment in accordance with the second embodiment of the present invention, the selecting unit 200 mainly includes an identifying subunit 2003 and a selecting subunit 2004, and the main function of the two components is as follows:

The identification subunit 2003 is adapted to identify the unidentified intra frequency cells from the intra frequency cells measured by the intra frequency measurement unit 100;

The selecting subunit 2004 is adapted to select the intra frequency cells from the intra frequency cells identified by the identifying subunit 2003 for the services combining unit 300 subsequently implementing the combination of the broadcast multicast services received.

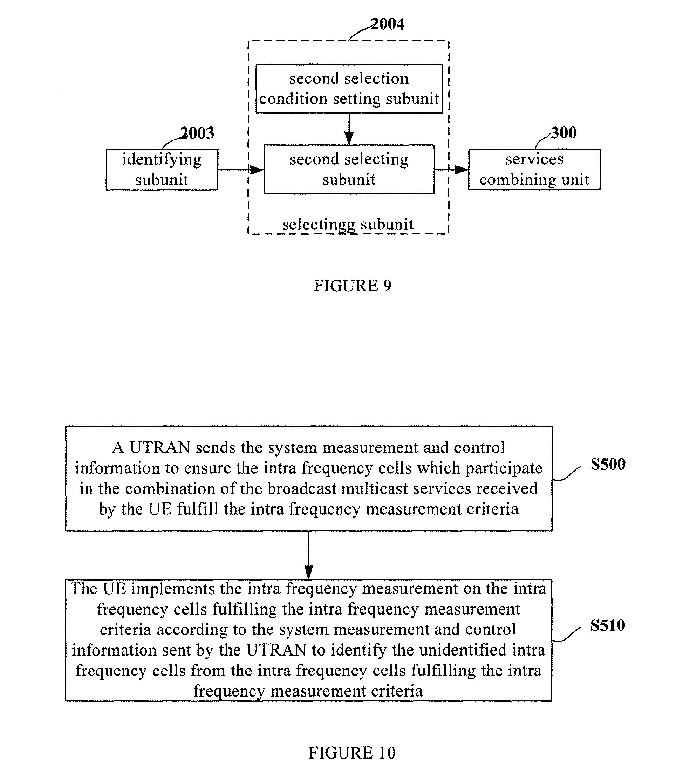

Referring to Figure 9, which is a specific component block diagram of the selecting subunit in the above Figure 8, the selecting subunit 2004 specifically includes a second selection condition setting subunit and a second selecting subunit, and the main function of the two components is as follows:

The second selection condition setting subunit is adapted to preset a second selection condition. The second selection condition preset in the second selection condition setting subunit may be, but is not limited to bebut not limited to:

ranking the intra frequency cells newly identified and the intra frequency cells previously identified by the identifying subunit 2003 according to the reception quality of their broadcast multicast service channels; and

selecting N intra frequency cells having higher reception quality of broadcast multicast service channel a ccording to the ranking result, where the N is a natural number;

The second selecting subunit is adapted to select the corresponding intra frequency cells from the intra frequency cells newly identified and the intra frequency cells previously identified by the identification subunit 2003 according to the second selection condition set by the second selection condition setting subunit. In other words, according to the selection condition preset by the above second selection condition setting subunit, the second selecting subunit ranks the intra frequency cells newly identified and the intra frequency cells previously identified by the identification subunit 2003 according to the reception quality of their broadcast multicast service channel, and according to the ranking result, selects N intra frequency cells having higher reception quality of broadcast multicast service channel for the services combining unit 300 subsequently implementing the combination of the broadcast multicast services received.

The above broadcast multicast services mentioned in the above user equipment include, but is not limited to but not limited to, the multimedia broadcast multicast point-to-multipoint services (MBMS PTM services). The user equipment may operate in a frequency division duplex mode (FDD) and also can operate in a time division duplex mode (TDD).

Embodiment 1, the implementation process of the present invention solution being applied by the FDD mode terminal to realize an effective combination implemented on the MBMS PTM services born on the MTCH is as follows:

1. When the FDD mode terminal is receiving the MBMS PTM services born on the MTCH, it acquires the intra frequency cells which participate in the combination of the MBMS PTM services received by itself according to the control information born on the MTCH channel;

2. The FDD mode terminal respectively implements the intra frequency measurement on the above intra frequency cells which are acquired and participate in the combination of the MBMS PTM services received by itself, and whether the intra frequency cells acquired fulfill the requirements of the intra frequency measurement criteria are not considered;

3. The FDD mode terminal which is in the state of receiving the MBMS PTM services born on the MTCH implements the identification on the unidentified intra frequency cells in the intra frequency cells acquired;

4. The FDD mode terminal ranks the intra frequency cells identified from the intra frequency cells acquired according to the reception quality of their MTCH, and according to the ranking result, selects a plurality of intra frequency cells having higher reception quality of the MTCH for implementing the combination of the MBMS PTM services born on the MTCH.

Embodiment 2: the implementation process of the present invention solution applied by the TDD mode terminal to realize an effective combination implemented on the MBMS PTM services born on the MTCH is as follows:

10. When the TDD mode terminal receives the MBMS PTM services born on the MTCH, it acquires the intra frequency cells which participate in the combination of the MBMS PTM services received by itself according to the control information born on the MTCH channel;

20. The TDD mode terminal respectively implements the intra frequency measurement on the above intra frequency cells which are acquired and participate in the combination of the MBMS PTM services received by itself, and whether the intra frequency cells acquired fulfill the requirements of the intra frequency measurement criteria are not considered;

30. The TDD mode terminal which is in the state of receiving the MBMS PTM services born on the MTCH implements the identification on the unidentified intra frequency cells in the intra frequency cells acquired;

40. The TDD mode terminal ranks the intra frequency cells identified from the intra frequency cells acquired according to the reception quality of their MTCH, and according to the ranking result, selects a plurality of intra frequency cells having higher reception quality of the MTCH for implementing the combination of the MBMS PTM services born on the MTCH.

In addition, the present intention also provides another method for identifying the intra frequency cells. It is similarly realized that when the user equipment is in the state of receiving the broadcast multicast services, it may implement the identification on the intra frequency cells which participate in the combination of the broadcast multicast services received. Based on the method for identifying the intra frequency cells, the present invention provides a method for combining the broadcast multicast services correspondingly to enable the user equipment to s elect a plurality of suitable intra frequency cells from the intra frequency cells which are identified from the intra frequency cells which participate in the combination of the broadcast multicast services received, which are used for implementing the combination of the broadcast multicast services received. It realizes the purpose that the user equipment may implement an effective combination on the broadcast multicast services received by itself and improve the coverage of the broadcast multicast services.

Referring to Figure 10, which is a main realization principle flowchart of another method for identifying the intra frequency cells in accordance with the present invention. The main realization process is as follows:

S500: The UTRAN sends system measurement and control information to ensure the intra frequency cells which participate in the combination of the broadcast multicast services received by a user equipment to fulfill the intra frequency measurement criteria; and

S510: According to the system measurement and control information sent by the UTRAN, the user equipment implements the intra frequency measurement on the intra frequency cells fulfilling the intra frequency measurement criteria to identify the unidentified intra frequency cells from the intra frequency cells fulfilling the intra frequency measurement criteria;

When a hierarchy cell structure (HCS) is not applied, the UTRAN sends the system measurement and control information which does not contain an intra frequency measurement threshold (Sintrasearch) to the current service cell of the user equipment to realize to ensure that the intra frequency cells which participate in the combination of the broadcast multicast services received by the user equipment fulfill the intra frequency measurement criteria.

When the hierarchy cell structure (HCS) is applied, the UTRAN may realize to ensure that the intra frequency cells which participate in the combination of the broadcast multicast services received by the user equipment fulfill the intra frequency measurement criteria by:

sending the system measurement and control information which does not contain an intra frequency measurement threshold (Sintrasearch) to the current service cell of the user equipment; or sending the system measurement and control information which does not contain a measurement threshold of the hierarchy cell structure (SearchHCS); or sending the system measurement and control information which does not contain an inter frequency measurement threshold (Sintersearch) when the user equipment is a FDD mode terminal.

In addition, when the HCS is not applied, the UTRAN sends the system measurement and control information containing the intra frequency measurement threshold (Sintrasearch) which is bigger than the value of the reception quality obtained by implementing a S criterion (the S criterion specifically refer to the prior art descriptions) calculation on the current service cell of the user equipment to the current service cell of the user equipment to realize to ensure that the intra frequency cells which participate in the combination of the broadcast multicast services received by the user equipment fulfill the intra frequency measurement criteria.

In addition, when the HCS is applied, the UTRAN realizes to ensure that the intra frequency cells which participate the combination of the broadcast multicast services received by the user equipment fulfill the intra frequency measurement criteria by:

sending the system measurement and control information containing the measurement threshold of the hierarchy cell structure (SearchHCS) which is bigger than the value of the reception quality obtained by implementing a calculation according to the S criterion on the current service cell of the user equipment to the current service cell of the user equipment; or

sending the system measurement and control information containing the inter frequency measurement threshold (Sintersearch) which is bigger than the value of the reception quality obtained by implementing a calculation according to the S criterion on the current service cell of the user equipment when the user equipment is an FDD mode terminal.

The above broadcast multicast services mentioned in the above processes include, but is not limited to includebut not limited to, the multimedia broadcast multicast point-to-multipoint services (MBMS PTM services). T he user equipment mentioned includes, but is not limited to includebut not limited to, a frequency division duplex mode terminal (FDD mode terminal) or a time division duplex mode terminal (TDD mode terminal).

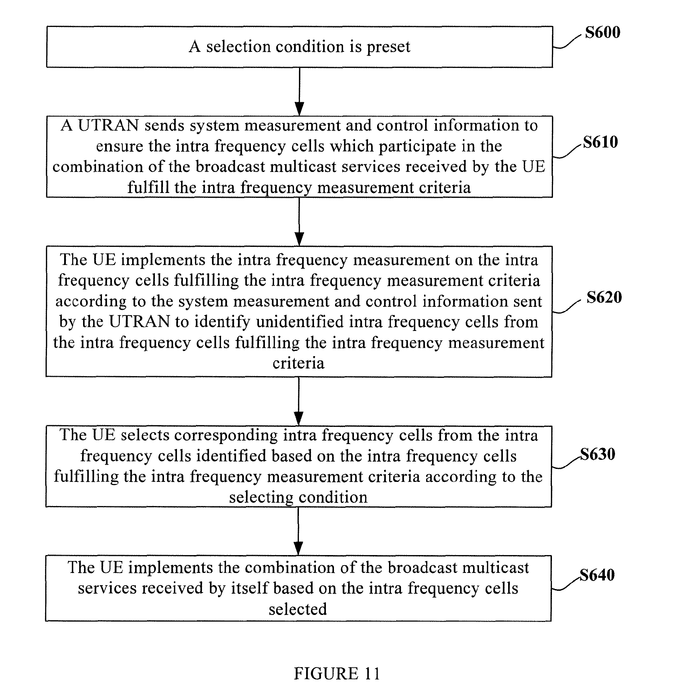

Based on another method for identifying the intra frequency cells provided by the present invention, the present invention also provides a method for combining the broadcast multicast services correspondingly. Referring to Figure 11, which is a main realization principle flowchart of another method for combining the broadcast multicast services in accordance with the present invention. The main realization process is as follows:

S600: A selection condition is preset in the user equipment. The selection condition set may be, but is not limited to bebut not limited to :

ranking all the identified intra frequency cells according to the intra frequency cells fulfilling the intra frequency measurement criteria according to the reception quality of broadcast multicast service channel; and

Selecting N intra frequency cells having higher reception quality of broadcast multicast service channel which are used for implementing the combination of the broadcast multicast services received (where the N is a natural number) according to the ranking result;

S610: The UTRAN sends system measurement and control information to ensure the intra frequency cells which participate in the combination of the broadcast multicast services received by the user equipment fulfill the intra frequency measurement criteria;

S620: The user equipment implements the intra frequency measurement on the intra frequency cells fulfilling the intra frequency measurement criteria according to the system measurement and control information sent by the UTRAN, so as to identify the unidentified intra frequency cells from the intra frequency cells fulfilling the intra frequency measurement criteria;

S630: The user equipment selects the corresponding intra frequency cells from the identified intra frequency cells according to the intra frequency cells fulfilling the intra frequency measurement criteria according to a selection condition preset. In other words, according to the above selection condition, the user equipment ranks each of the intra frequency cells identified according to the reception quality of their broadcast multicast service channel, and selects N intra frequency cells having higher reception quality of broadcast multicast service channel from the result of ranking, which are used for subsequently implementing the combination of the broadcast multicast services received by itself; and

S640: The user equipment implements the combination of the broadcast multicast services received by itself according to the intra frequency cells selected.

When the HCS is not applied, the UTRAN sends the system measurement and control information which does not contain the Sintrasearch to the current service cell of the user equipment to realize to ensure that the intra frequency cells which participate in the combination of the broadcast multicast services received by the user equipment fulfill the intra frequency measurement criteria.

When the HCS is applied, the UTRAN may realize to ensure that the intra frequency cells which participate in the combination of the broadcast multicast services received by the user equipment fulfill the intra frequency measurement criteria by:

sending the system measurement and control information which does not contain the Sintrasearch to the current service cell of the user equipment; or sending the system measurement and control information which does not contain the SearchHCS to the current service cell of the user equipment; or sending the system measurement and control information which does not contain the Sintersearch when the user equipment is an FDD mode terminal.

In addition, when the HCS is not applied, the UTRAN sends the system measurement and control information containing the Sintrasearch which is bigger than the value of the reception quality obtained by implementing a S criterion (the S criterion specifically refer to the prior art descriptions) calculation on the current service cell of the user equipment to the current service cell of the user equipment to realize to ensure that the intra frequency cells which participate in the combination of the broadcast multicast services received by the user equipment fulfill the intra frequency measurement criteria.

In addition, when the HCS is applied, the UTRAN realizes to ensure that the intra frequency cells which participate the combination of the broadcast multicast services received by the user equipment fulfill the intra frequency measurement criteria by:

sending the system measurement and control information containing the SearchHCS which is bigger than the value of the reception quality obtained by implementing a calculation according to the S criterion on the current service cell of the user equipment to the current service cell of the user equipment; or

sending the system measurement and control information containing the Sintersearch which is bigger than the value of the reception quality obtained by implementing the S criterion calculation on the current service cell of the user equipment when the user equipment is an FDD mode terminal.

The broadcast multicast services mentioned in the above processes include, but is not limited to includebut not limited to, the multimedia broadcast multicast point-to-multipoint services (MBMS PTM services). T he user equipment mentioned includes, but is not limited to includebut not limited to, a frequency division duplex mode terminal (FDD mode terminal) or a time division duplex mode terminal (TDD mode terminal).

Obviously, it should be understood that various modifications, changes or equivalent replacements could be made by an ordinary person skilled in the art without departing from the spirit and scope of the technical solution of the present invention. If these modifications and changes of the present invention belong to the scope of the claims and the equal technologies of the present invention, the present invention intents to include these modification and changes.

## Claims

1. A method for identifying intra frequency cells, comprising:
acquiring, by a user equipment in the state of receiving broadcast multicast services, intra frequency cells which participate in a combination of the broadcast multicast services received by the user equipment itself; and
implementing an intra frequency measurement on each of the intra frequency cells acquired to identify unidentified intra frequency cells from the intra frequency cells acquired.

2. The method according to claim 1, wherein the user equipment acquires the intra frequency cells according to control information born on the control channel of the broadcast multicast services.

3. The method according to claim 1, wherein the broadcast multicast service is a multimedia broadcast multicast point-to-multipoint service.

4. The method according to claim 1, wherein the user equipment is:
a frequency division duplex mode terminal; or
a time division duplex mode terminal.

5. A user equipment, comprising:
an intra frequency cells acquiring unit adapted to acquire intra frequency cells which participate in a combination of broadcast multicast services received when it is in the state of receiving the broadcast multicast services; and
a measurement identifying unit adapted to implement an intra frequency measurement on each of the intra frequency cells acquired by the intra frequency cells acquiring unit to identify unidentified intra frequency cells from the intra frequency cells acquired.

6. The user equipment according to claim 5, wherein the intra frequency cells acquiring unit specifically comprises:
a control information receiving subunit adapted to receive control information born on the control channel of the broadcast multicast services; and
an intra frequency cells acquiring subunit adapted to acquire the intra frequency cells which participate in the combination of the broadcast multicast services received according to the control information received by the control information receiving subunit.

7. A method for combining the broadcast multicast services, comprising:
implementing, by a user equipment in the state of receiving broadcast multicast services, an intra frequency measurement on intra frequency cells which participate in a combination of the broadcast multicast services received by the user equipment itself;
selecting, by the user equipment, intra frequency cells from the intra frequency cells measured; and
implementing the combination of the broadcast multicast services received by itself based on the intra frequency cells selected.

8. The method according to claim 7, wherein the user equipment acquires the intra frequency cells which participate in the combination of the broadcast multicast services received by the user equipment itself according to control information born on the control channel of the broadcast multicast services.

9. The method according to claim 7, wherein the user equipment implements the intra frequency measurement on the intra frequency cells which fulfill intra frequency measurement criteria and participate in the combination of the broadcast multicast services received by the user equipment itself.

10. The method according to claim 7, wherein the selecting intra frequency cells from the intra frequency cells measured specifically comprises:
presetting a selecting condition; and
selecting, by the user equipment, the corresponding intra frequency cells from the intra frequency cells measured according to the selecting condition.

11. The method according to claim 10, wherein the selecting condition is:
ranking the intra frequency cells measured by the user equipment according to the reception quality of broadcast multicast service channel; and
selecting N intra frequency cells having higher reception quality of broadcast multicast service channel according to the ranking result, where the N is a natural number.

12. The method according to claim 7, wherein the selecting intra frequency cells from the intra frequency cells measured specifically comprises:
identifying, by the user equipment, the unidentified intra frequency cells from the intra frequency cells measured; and
selecting the intra frequency cells from the intra frequency cells identified.

13. The method according to claim 12, wherein the selecting the intra frequency cells from the intra frequency cells identified comprises:
presetting a selecting condition;
selecting, by the user equipment, the corresponding intra frequency cells from the intra frequency cells identified according to the selecting condition.

14. The method according to claim 13, wherein the selecting condition is:
ranking the intra frequency cells identified by the user equipment according to the reception quality of broadcast multicast service channel; and
selecting N intra frequency cells having higher reception quality of the broadcast multicast service channel according to the ranking result, where the N is a natural number.

15. The method according to any one of claims 7~14, wherein the broadcast multicast service is a multimedia broadcast multicast point-to-multipoint service.

16. The method according to any one of claims 7~14, wherein the user equipment is:
a frequency division duplex mode terminal; or
a time division duplex mode terminal.

17. A user equipment, comprising:
an intra frequency measurement unit adapted to implement an intra frequency measurement on intra frequency cells which participate in a combination of broadcast multicast services received by a user equipment;
a selecting unit adapted to select intra frequency cells from the intra frequency cells measured by the intra frequency measurement unit; and
a service combining unit adapted to i mplement the combination of the broadcast multicast services received by the user equipment based on the intra frequency cells selected by the selecting unit.

18. The user equipment according to claim 17, wherein the selecting unit specifically comprises:
a first selecting condition setting subunit adapted to preset a first selecting condition; and
a first selecting subunit adapted to select corresponding intra frequency cells from the intra frequency cells measured by the intra frequency measurement unit according to the first selecting condition set by the first selecting condition setting subunit.

19. The user equipment according to claim 18, wherein the first selecting condition preset by the first selecting condition setting subunit is:
ranking the intra frequency cells measured by the intra frequency measurement unit according to the reception quality of broadcast multicast service channel; and
selecting N intra frequency cells having higher reception quality of broadcast multicast service channel according to the ranking result, where the N is a natural number.

20. The user equipment according to claim 17, wherein the selecting unit specifically comprises:
an identifying subunit adapted to identify unidentified intra frequency cells from the intra frequency cells measured by the intra frequency measurement unit;
a selecting subunit adapted to select intra frequency cells from the intra frequency cells identified by the identifying subunit.

21. The user equipment according to claim 20, wherein the selecting subunit specifically comprises:
a second selecting condition setting subunit adapted to preset a second selecting condition; and
a second selecting subunit adapted to select corresponding intra frequency cells from the intra frequency cells identified by the identifying subunit according to the second selecting condition set by the second selecting condition setting subunit.

22. The user equipment according to claim 21, wherein the second selecting condition preset by the second selecting condition setting subunit is:
ranking the intra frequency cells identified by the identifying subunit according to the reception quality of broadcast multicast service channel; and
selecting N intra frequency cells having higher reception quality of the broadcast multicast service channel according to the ranking result, where the N is a natural number.

23. A method for identifying the intra frequency cells, comprising:
sending, by a UTRAN, system measurement and control information for ensuring intra frequency cells which participate in a combination of broadcast multicast services received by a user equipment to fulfill intra frequency measurement criteria; and
implementing, by the user equipment, an intra frequency measurement on the intra frequency cells fulfilling the intra frequency measurement criteria to identify unidentified intra frequency cells from the intra frequency cells fulfilling the intra frequency measurement criteria, according to the system measurement and control information sent by the UTRAN.

24. The method according to claim 23, wherein when a hierarchy cell structure is not applied, the UTRAN sends the system measurement and control information which does not contain an intra frequency measurement threshold to a current service cell of the user equipment to accomplish to ensure that the intra frequency cells which participate in the combination of the broadcast multicast services received by the user equipment fulfill the intra frequency measurement criteria.

25. The method according to claim 23, wherein when a hierarchy cell structure is applied, the UTRAN accomplishes to ensure that the intra frequency cells which participate in the combination of the broadcast multicast services received by the user equipment fulfill the intra frequency measurement criteria by
sending the system measurement and control information which does not contain an intra frequency measurement threshold to the current service cell of the user equipment; or
sending the system measurement and control information which does not contain a measurement threshold of the hierarchy cell structure; or
sending the system measurement and control information which does not contain a inter frequency measurement threshold when the user equipment is a frequency division duplex mode terminal.

26. The method according to claim 23, wherein when the hierarchy cell structure is not applied, the UTRAN sends the system measurement and control information containing the intra frequency measurement threshold which is bigger than the value of the reception quality obtained by implementing a calculation based on S criterion on the current service cell of the user equipment to the current service cell of the user equipment to accomplish to ensure that the intra frequency cells which participate in the combination of the broadcast multicast services received by the user equipment fulfill the intra frequency measurement criteria.

27. The method according to claim 23, wherein when the hierarchy cell structure is applied, the UTRAN accomplishes to ensure that the intra frequency cells which participate in the combination of the broadcast multicast services received by the user equipment fulfill the intra frequency measurement criteria by
sending the system measurement and control information containing the measurement threshold of the hierarchy cell structure which is bigger than the value of the reception quality obtained by implementing a calculation based on S criterion on the current service cell of the user equipment to the current service cell of the user equipment; or
sending the system measurement and control information containing a inter frequency measurement threshold which is bigger than the value of the reception quality obtained by implementing the S criterion calculation on the current service cell of the user equipment when the user equipment is a frequency division duplex mode terminal.

28. The method according to any one of claims 23~27, wherein the broadcast multicast service is a multimedia broadcast multicast point-to-multipoint service.

29. The method according to any one of claims 23~27, wherein the user equipment is:
a frequency division duplex mode terminal; or
a time division duplex mode terminal.

30. A user equipment, comprising:
a unit adapted to receive system measurement and control information s ent by a UTRAN for ensuring the intra frequency cells which participate in a combination of broadcast multicast services received by a user equipment to fulfill intra frequency measurement criteria; and
a unit adapted to implement an intra frequency measurement on the intra frequency cells fulfilling the intra frequency measurement criteria according to the system measurement and control information sent by the UTRAN, so as to identify unidentified intra frequency cells from the intra frequency cells fulfilling the intra frequency measurement criteria.

31. A method for combining the broadcast multicast services, comprising:
sending, by a UTRAN, system measurement and control information for ensuring the intra frequency cells which participate in a combination of broadcast multicast services received by a user equipment to fulfill intra frequency measurement criteria;
implementing, by the user equipment, an intra frequency measurement on the intra frequency cells fulfilling the intra frequency measurement criteria to identify unidentified intra frequency cells from the intra frequency cells fulfilling the intra frequency measurement criteria, according to the system measurement and control information sent by the UTRAN;
selecting, by the user equipment, corresponding intra frequency cells from the intra frequency cells which have been identified based on the intra frequency cells fulfilling the intra frequency measurement criteria according to a selecting condition preset; and
implementing the combination of the broadcast multicast services received by the user equipment based on the intra frequency cells selected.

32. The method according to claim 31, wherein the selecting condition is:
ranking all the intra frequency cells which have been identified based on the intra frequency cells fulfilling the intra frequency measurement criteria according to the reception quality of broadcast multicast service channel; and
selecting N intra frequency cells having higher reception quality of broadcast multicast service channel according to the ranking result, where the N is a natural number.

33. The method according to claim 31 or 32, wherein when a hierarchy cell structure is not applied, the UTRAN sends the system measurement and control information which does not contain an intra frequency measurement threshold to a current service cell of the user equipment to accomplish to ensure that the intra frequency cells which participate in the combination of the broadcast multicast services received by the user equipment fulfill the intra frequency measurement criteria.

34. The method according to claim 31 or 32, wherein when a hierarchy cell structure is applied, the UTRAN accomplishes to ensure that the intra frequency cells which participate in the combination of the broadcast multicast services received by the user equipment fulfill the intra frequency measurement criteria by:
sending the system measurement and control information which does not contain an intra frequency measurement threshold to the current service cell of the user equipment; or
sending the system measurement and control information which does not contain a measurement threshold of the hierarchy cell structure; or
sending the system measurement and control information which does not contain a inter frequency measurement threshold when the user equipment is a frequency division duplex mode terminal.

35. The method according to claim 31 or 32, wherein when the hierarchy cell structure is not applied, the UTRAN sends the system measurement and control information containing the intra frequency measurement threshold which is bigger than the value of the reception quality obtained by implementing a calculation based on S criterion on the current service cell of the user equipment to the current service cell of the user equipment to accomplish to ensure that the intra frequency cells which participate in the combination of the broadcast multicast services received by the user equipment fulfill the intra frequency measurement criteria.

36. The method according to claim 31 or 32, wherein when the hierarchy cell structure is applied, the UTRAN accomplishes to ensure that the intra frequency cells which participate in the combination of the broadcast multicast services received by the user equipment fulfill the intra frequency measurement criteria by:
sending the system measurement and control information containing the measurement threshold of the hierarchy cell structure which is bigger than the value of the reception quality obtained by implementing a calculation based on S criterion on the current service cell of the user equipment to the current service cell of the user equipment; or
sending the system measurement and control information containing a inter frequency measurement threshold which is bigger than the value of the reception quality obtained by implementing a calculation based on S criterion on the current service cell of the user equipment when the user equipment is a frequency division duplex mode terminal.

37. The method according to claim 31 or 32, wherein the broadcast multicast service is a multimedia broadcast multicast point-to-multipoint service.

38. The method according to claim 31 or 32, wherein the user equipment is:
a frequency division duplex mode terminal; or
a time division duplex mode terminal.

39. A user equipment, comprising:
a unit adapted to receive system measurement and control information s ent by a UTRAN for ensuring intra frequency cells which participate in a combination of broadcast multicast services received by a user equipment to fulfill intra frequency measurement criteria; and
a unit adapted to according to the system measurement and control information sent by the UTRAN, implement an intra frequency measurement on the intra frequency cells fulfilling the intra frequency measurement criteria to identify unidentified intra frequency cells from the intra frequency cells fulfilling the intra frequency measurement criteria;
a unit adapted to select corresponding intra frequency cells from the intra frequency cells identified according to a selecting condition preset; and
a unit adapted to implement a combination of the broadcast multicast services received by the user equipment based on the intra frequency cells selected.
